# EUROPÄISCHE PATENTSCHRIFT

(11) **EP 3 784 430 B1**
(45) Veröffentlichungstag und Bekanntmachung des Hinweises auf die Patenterteilung: **20.12.2023**
(21) Anmeldenummer: 19715892.6
(22) Anmeldetag: 02.04.2019
(51) Int. Cl.: B23G 3/08, B23G 5/20

(54) **GEWINDEBOHR-WERKZEUG UND VERFAHREN ZUR ERZEUGUNG EINER GEWINDEBOHRUNG**
TAPPING TOOL AND METHOD FOR PRODUCING A THREADED BORE
OUTIL DE TARAUDAGE ET PROCÉDÉ DE PRODUCTION D'UN TROU TARAUDÉ

(30) Priorität: 27.04.2018 DE 102018206545
(43) Veröffentlichungstag der Anmeldung: 03.03.2021
(73) Patentinhaber: Audi AG, 85045 Ingolstadt (DE)
(72) Erfinder: KOPTON, Peter, 85092 Kösching (DE)
(86) Internationale Anmeldenummer: PCT/EP2019/058297
(87) Internationale Veröffentlichungsnummer: WO 2019/206583

(56) Entgegenhaltungen:
- CN-A- 104 174 941
- DE-A1-102015 013 247
- DE-A1-102016 008 477
- DE-A1-102016 008 478
- US-A- 5 429 459
- US-A1- 2007 235 228

## Beschreibung

Die Erfindung betrifft ein Gewindebohr-Werkzeug nach dem Oberbegriff des Anspruches 1 sowie ein Verfahren zur Erzeugung einer Gewindebohrung, insbesondere ein Gewindesackloch, nach dem Anspruch 8.

In einem sogenannten Einschuss-Gewindebohr-Prozess wird mit einem Einschuss-Gewindebohr-Werkzeug sowohl eine Kernbohrung als auch ein Innengewinde-Schneiden in einem gemeinsamen Werkzeughub durchgeführt. Das Einschuss-Gewindebohr-Werkzeug weist an seiner Bohrerspitze eine Hauptschneide und ein in einer Gewindebohr-Richtung nacheilendes Gewindeprofil mit zumindest einem Gewinde-Schneidzahn auf. In dem Verfahren erfolgen zunächst der Gewindebohr-Hub und anschließend ein dazu gegenläufiger Reversier-Hub. Im Gewindebohr-Hub erzeugt einerseits die Werkzeug-Hauptschneide die Kernlochbohrung und andererseits das Werkzeug-Gewindeprofil das Innengewinde an der Innenwandung der Kernlochbohrung bis zum Erreichen einer nutzbaren Soll-Gewindetiefe. Hierzu wird im Gewindebohr-Hub das Gewindebohr-Werkzeug bei einem Gewindebohr-Vorschub mit dazu synchronisierter Gewindebohr-Drehzahl betrieben. Im nachfolgenden gegenläufigen Reversier-Hub wird das Gewindebohr-Werkzeug in einer Reversier-Richtung aus der Gewindebohrung herausgeführt, und zwar mit entgegengesetztem Reversier-Vorschub sowie dazu synchronisierter Reversier-Drehzahl. Dadurch ist gewährleistet, dass das Gewindeprofil des Gewindebohr-Werkzeugs im Gewindegang des Innengewindes belastungsfrei aus der Gewindebohrung bewegt wird.

Im obigen Verfahren werden im Gewindebohr-Hub Späne erzeugt, die in einer zur Gewindebohr-Richtung gegenläufigen Spanabfuhrrichtung aus der Gewindebohrung gefördert werden. Dabei kollidieren die sich in der Spanabfuhrrichtung bewegenden Späne mit den Späne zugewandten Gewindeflanken des Innengewindes. An den Späne zugewandten Gewindeflanken des Innengewindes kann es daher zu einem Materialabrieb kommen, der zu Fehlstellen im Innengewinde führt. Solche Fehlstellen können wiederum das Setzverhalten eines in das Innengewinde verschraubten Schraubelementes beeinträchtigen. Aus der DE 38 80 394 T2 ist ein kombiniertes Werkzeug zum Bohren eines Loches und zum Gewindeschneiden bekannt. Mit dem Gewindebohr-Werkzeug wird zunächst eine Kernlochbohrung erzeugt. Anschließend wird das Gewindebohr-Werkzeug mit seiner Werkzeugachse in einer Kreisbahn um die Bohrungsachse bewegt, und zwar unter Rotation des Gewindebohr-Werkzeuges, wodurch das Gewindeprofil ein Innengewinde in der Kernlochbohrung erzeugt. Im Wesentlichen dasselbe Verfahren ist auch aus der DE 39 39 795 C2 und aus der US 5 678 962 bekannt. Weitere Gewindebohr-Werkzeuge sind aus der US 6 499 920 B2 und aus der DE 28 52 906 A bekannt.

Aus der DE 10 2016 008 477 A1 ist ein gattungsgemäßes Verfahren zur Erzeugung einer Gewindebohrung bekannt. Ein Werkzeug gemäß dem Oberbegriff des Anspruches 1 sowie ein Verfahren zur Erzeugung einer Gewindebohrung ist aus der DE 10 2016 008 478 A1 bekannt Aus der US 2007/235228 A1 sind ein Bohrer sowie ein Wandschutz- und Bohrverfahren bekannt. Aus der CN 104 174 941 A ist ein Bohrwerkzeug bekannt.

Die Aufgabe der Erfindung besteht darin, ein Gewindebohr-Werkzeug sowie ein Verfahren zur Erzeugung einer Gewindebohrung in einem Werkstück bereitzustellen, mit dem eine dauerhaft betriebssichere Schraubverbindung gewährleistet ist.

Die Aufgabe ist durch die Merkmale des Patentanspruches 1 oder 8 gelöst. Bevorzugte Weiterbildungen der Erfindung sind in den Unteransprüchen offenbart.

Die Erfindung beruht auf dem Sachverhalt, dass im Gewindebohr-Hub die abzuführenden Späne mit spänezugewandten Gewindeflanken des Innengewindes kollidieren und dieses gegebenenfalls beschädigen können. Vor diesem Hintergrund werden gemäß dem Patentanspruch 1 im Gewindebohr-Hub die spänezugewandten Gewindeflanken des Innengewindes noch nicht auf ein Fertigmaß hergestellt, sondern vielmehr mit einem Flanken-Aufmaß hergestellt. Auf diese Weise wird an den spänezugewandten Gewindeflanken eine Kollisionskontur bereitgestellt, mit der die abzuführenden Späne kollidieren.

Erst in einem, dem Gewindebohr-Hub nachgeschalteten Endbearbeitungsschritt wird das Flanken-Aufmaß von den spänezugewandten Gewindeflanken des Innengewindes bis auf das Fertigmaß abgetragen. Dieser Endbearbeitungsschritt findet im Reversier-Hub statt, bei dem das in der Reversier-Richtung aus der Gewindebohrung geführte Werkzeug-Gewindeprofil das Flanken-Aufmaß von den Späne zugewandten Gewindeflanken bis auf das Fertigmaß abträgt oder formt. Der Materialabtrag an den Gewindeflanken erfolgt mit zumindest einem Reversierzahn, der im Gewindeprofil des Gewindebohr-Werkzeugs ausgebildet ist und dessen Geometrie später beschrieben ist.

Im Gewindebohr-Hub sind der Gewindebohr-Vorschub und die damit synchronisierte Gewindebohr-Drehzahl so aufeinander abgestimmt, dass der erzeugte Gewindegang des Innengewindes mit einer vordefinierten Gewindebohr-Gewindesteigung aufweist. Analog dazu sind auch im Reversier-Hub der Reversier-Vorschub und die damit synchronisierte Reversier-Drehzahl so aufeinander abgestimmt, dass sich eine Reversier-Gewindesteigung ergibt. Die Reversier-Gewindesteigung kann je nach Einstellung der vorgenannten Parameter identisch sein mit der Gewindebohr-Gewindesteigung oder gegebenenfalls auch davon unterschiedlich sein. Beispielhaft kann im Gewindebohr-Hub dem Innengewinde eine erste Steigung (das heißt Gewindebohr-Gewindesteigung) aufgeprägt werden, während im Reversier-Hub dem Innengewinde eine dazu unterschiedliche zweite Gewindesteigung (das heißt Reversier-Gewindesteigung) aufgeprägt wird. Die Reversier-Gewindesteigung und die Gewindehub-Gewindesteigung können so aufeinander abgestimmt werden, dass sich insgesamt ein belastungsoptimiertes Innengewinde-Profildesign ergibt.

Beispielhaft kann im Gewindebohr-Hub - mit Ausnahme der Späne zugewandten Gewindeflanken des Innengewindes - die Innengewinde-Geometrie (das heißt die späneabgewandten Gewindeflanken des Innengewindes, der radial innere Gewinde-Innenscheitel des Innengewindes sowie der radial äu-ßere Gewindegrund des Innengewindes) bereits auf ein Fertigmaß hergestellt sein. Erst im Anschluss daran können im Reversier-Hub die spänezugewandten Gewindeflanken des Innengewindes auf das Fertigmaß hergestellt werden.

In einer bevorzugten Ausführungsform folgt nach dem Gewindebohr-Hub nicht unmittelbar der Reversier-Hub, sondern folgt vielmehr ein Nutformschritt, bei dem eine an das Innengewinde anschließende Umlaufnut ohne Gewindesteigung gebildet wird, in der das Gewindeprofil des Gewindebohr-Werkzeuges belastungsfrei drehen kann. Auf diese Weise kann die Gewindebohr-Drehzahl bis auf 0 reduziert werden, ohne dass es aufgrund von übermäßig großer Schneidenbelastung zu einem Werkzeugbruch oder zu einem Ausbrechen des Gewindeprofils kommt.

Das Gewindeprofil des Gewindebohr-Werkzeugs kann später beschriebene Gewindeprofilzähne und/oder den bereits erwähnten Reversierzahn aufweisen. Sowohl die Gewindeprofilzähne als auch der Reversierzahn können jeweils als Formzahn (mit entsprechenden Formkanten) oder als Schneidzahn (mit entsprechenden spanabhebenden Schneidkanten) oder als eine Kombination daraus ausgebildet sein.

Wie oben erwähnt, kann das Gewindeprofil des Gewindebohr-Werkzeugs in der im Nutformschritt erzeugten Umlaufnut ohne Gewindesteigung belastungsfrei drehen. Durch die Bereitstellung der Umlaufnut wird es außerdem ermöglicht, dass das Gewindebohr-Werkzeug mit einer Schneidkante eine umlaufende Gewindesenkung in der Bohrungsöffnung der Bohrung erzeugt. Die umlaufende Gewindesenkung kann also während des obigen Nutformschrittes erzeugt werden.

In einer technischen Umsetzung kann der Gewindebohr-Hub in der Gewindebohr-Richtung unmittelbar mit einem Nutform-Hub verlängert werden. In diesem Fall wird das Gewindebohr-Werkzeug über die Soll-Gewindetiefe hinaus bis zum Erreichen einer Soll-Bohrungstiefe bewegt, und zwar mit einem Nutform-Vorschub sowie einer Nutform-Drehzahl, die zueinander nicht synchronisiert sind und/oder unterschiedlich zum Gewindebohr-Vorschub und zur Gewindebohr-Drehzahl sind.

Bevorzugt ist es, wenn am Ende des Nutformschrittes das Gewindeprofil, in der Axialrichtung betrachtet, vollständig in der Umlaufnut der Gewindebohrung belastungsfrei drehen kann. Die Umlaufnut wird während des Nutform-Hubes mit Hilfe der Hauptschneide sowie des Werkzeug-Gewindeprofils am Gewindebohr-Werkzeug erzeugt.

Bei Erreichen der Soll-Bohrungstiefe wird der Nutform-Vorschub auf 0 reduziert. Gleichzeitig wird auch die Nutform-Drehzahl auf 0 reduziert, um die für den Reversier-Hub erforderliche Drehrichtungsumkehr zu ermöglichen.

Beim Start des Reversier-Hubes wird das Gewindebohr-Werkzeug so angesteuert, dass das Werkzeug-Gewindeprofil nicht belastungsfrei, sondern unter spanabhebender Belastung in den Gewindegang-Auslauf eingefahren werden kann, der in die Umlaufnut einmündet. Anschließend wird das Gewindebohr-Werkzeug in einer zur Gewindebohr-Richtung gegenläufigen Reversier-Richtung aus der Gewindebohrung herausgeführt, und zwar mit einem Reversier-Vorschub sowie damit synchronisierter Reversier-Drehzahl, wodurch das Werkzeug-Gewindeprofil unter Materialabtrag und/oder Materialformung (das heißt unter Fertigstellung der Späne zugewandten Gewindeflanken auf das Fertigmaß) aus der Gewindebohrung herausgedreht werden kann.

Während der Durchführung des Gewindebohr-Hubes, des Nutform-Hubes und des Reversier-Hubes bleiben bevorzugt die Kernbohrungs-Längsachse und die Rotationsachse des Gewindebohr-Werkzeuges durchgängig koaxial zueinander ausgerichtet.

Ein Gewindebohr-Werkzeug zur Durchführung eines solchen Verfahrens kann bevorzugt einen Spannschaft und einen daran anschließenden Gewindebohr-Körper aufweisen. Entlang dessen Längsachse kann zumindest eine Spannut bis zu einer stirnseitigen Hauptschneide an der Bohrerspitze erstrecken. An der stirnseitigen Hauptschneide laufen eine die Spannut begrenzende Spanfläche und eine stirnseitige Freifläche der Bohrerspitze zusammen. In der Werkzeug-Umfangrichtung betrachtet kann die Spannut durch zumindest einen Bohrersteg begrenzt sein. Die Spanfläche der Spannut kann unter Bildung einer Nebenschneide in eine außenumfangsseitige Rückenfläche des Bohrerstegs übergehen. An der außenumfangsseitigen Rückenfläche des Bohrersteges kann das Gewindeprofil mit zumindest einem Gewinde-Schneidzahn ausgebildet sein. Die Zahnhöhe des Schneidzahns ist in der Radialrichtung so bemessen, dass der Schneidzahn die Hauptschneide in der Radialrichtung nach außen um einen Radialversatz überragt. Gegebenenfalls kann der Schneidzahn in der Radialrichtung nach außen flächenbündig die Hauptschneide verlängern. Alternativ und/oder zusätzlich kann der Schneidzahn in der Axialrichtung betrachtet um einen Axialversatz hinter der Hauptschneide angeordnet sein.

In einer bevorzugten Ausführungsvariante kann das Gewindebohr-Werkzeug drei Bohrerstege aufweisen. Jeder dieser Bohrerstege ist zumindest mit einem Gewinde-Schneidzahn ausgebildet. Die Gewinde-Schneidzähne sind bevorzugt nicht mit gleicher Schneiden-Geometrie ausgebildet, sondern vielmehr unterschiedlich ausgeführt. Beispielhaft können in der Bohrer-Umfangsrichtung hintereinander ein Vorschneidzahn, ein Mittelschneidzahn und ein Fertigbearbeitungszahn unterschiedlicher Schneidengeometrie am Bohrer ausgebildet sein. Die Schneidzähne sind in der Axialrichtung zueinander versetzt am Gewindebohr-Werkzeug ausgebildet. Deren Versatzmaße sind so mit der Gewindebohr-Drehzahl und mit dem Gewindebohr-Vorschub abgestimmt, dass ein einwandfreies Gewindeschneiden gewährleistet ist.

Damit im Reversier-Hub das Flanken-Aufmaß von der spänezugewandten Gewindeflanke betriebssicher (das heißt ohne vorzeitigem Werkzeugbruch) abgetragen wird, weist das Werkzeug-Gewindeprofil den bereits erwähnten Reversierzahn auf. Dieser kann mit einer Gewindeflanken-Schneid-/Formkante ausgebildet sein. Im Reversier-Hub kann die Gewindeflanken-Schneid-/Formkante das im Gewindebohr-Hub vorgehaltene Flanken-Aufmaß von den spänezugewandten Gewindeflanken bis auf das Fertigmaß abtragen.

Der Reversierzahn ist, wie auch der Gewindeprofilzahn, auf der Bohrersteg-Rückenfläche ausgebildet. In einer technischen Werkzeug-Realisierung kann der Reversierzahn die Haupt-Schneidenecke um eine Reversier-Zahnhöhe radial nach außen überragen. Die Gewindeflanken-Schneidkante des Reversierzahns kann an einer radial inneren Schneiden-Innenecke in eine Reversier-Schneide übergehen. In diesem Fall kann das Gewindebohr-Werkzeug nicht nur die spänezugewandte Gewindeflanke des Bohrloch-Innengewindes bearbeiten, sondern gleichzeitig auch dessen Gewinde-Innenscheitel entgraten. Bevorzugt können der Reversierzahn und/oder die Reversier-Schneide konstruktiv so ausgelegt sein, dass diese nur im Reversier-Hub aktiv sind und im Gewindebohr-Hub weitgehend funktionslos sind.

Die oben erwähnte Reversier-Schneide kann entlang der Bohrer-Längsrichtung verlaufen. In diesem Fall können an der Reversier-Schneide die außenumfangsseitige Bohrersteg-Rückenfläche und die Spanfläche der Spannut zusammenlaufen. Von daher sind die Reversier-Schneide und die Nebenschneide an, in der Bohrer-Umfangsrichtung gegenüberliegenden Bohrersteg-Längskanten ausgebildet.

Um ein stabiles Gewindeprofil am Gewindebohr-Werkzeug auszubilden, ist es bevorzugt, wenn sich in Bohrer-Umfangsrichtung ein auf der Bohrersteg-Rückenfläche ausgebildeter Zahnsteg an den zumindest einen Gewindeprofilzahn und/oder an den Reversierzahn anschließt. Auf diese Weise sind der Gewindeprofilzahn und/oder der Reversierzahn im Gewindebohr-Hub und/oder im Reversier-Hub vor einem frühzeitigen Werkzeugbruch geschützt. Bevorzugt können der Gewindeprofilzahn und der Reversierzahn über einen, auf der Bohrersteg-Rückenfläche ausgebildeten Zahnsteg miteinander verbunden sein. Der Zahnsteg kann in der Bohrer-Umfangsrichtung voneinander abgewandte Stirnseiten aufweisen, die jeweils den Gewindeprofilzahn und den Reversierzahn bilden.

Der Zahnsteg kann eine radial äußere Steg-Scheitelfläche sowie eine der Bohrerspitze zugewandte Steg-Flankenfläche und eine der Bohrerspitze abgewandte Steg-Flankenfläche aufweisen. Um die Werkzeug-Belastung während des Gewindebohr-Hubs und/oder während des Reversier-Hubs zu reduzieren, können die oben erwähnten Stegflächen zumindest teilweise als Freiflächen ausgebildet sein, die im Gewindebohr-Hub und/oder im Reversier-Hub im Wesentlichen funktionslos sind.

Die Steg-Scheitelfläche des obigen Zahnstegs kann an einer ersten Umfangs-Stegkante in die, der Bohrerspitze zugewandte Steg-Flankenfläche übergehen. Zudem kann die Steg-Scheitelfläche an einer zweiten Umfangs-Stegkante in die, der Bohrerspitze abgewandte Steg-Flankenfläche übergehen.

Zusätzlich zu den obigen Erfindungsaspekten kann das Gewindeprofil des Gewindebohr-Werkzeugs eine Umlaufnut-Schneide aufweisen. Die Umlaufnut-Schneide ist im Nutformschritt aktiv, der zwischen dem Gewindebohr-Hub und dem Reversierhub erfolgen kann. Die Umlaufnut-Schneide bewirkt eine reduzierte Werkzeug-Belastung während der Herstellung der Umlaufnut im Nutform-Hub.

In einer bevorzugten Ausführungsvariante kann zumindest eine der beiden oben erwähnten Umfangs-Stegkanten als eine solche Umlaufnut-Schneide ausgebildet sein, mittels der im Nutform-Hub die an das Bohrloch-Innengewinde anschließende Umlaufnut gebildet wird. Im Gewindebohr-Hub und im Reversier-Hub kann dagegen die Umlauf-Schneide im Wesentlichen funktionslos sein.

Wie aus der obigen Beschreibung hervorgeht, kann sich an das Innengewinde der Gewindebohrung die Umlaufnut anschließen. Diese erfüllt die folgende Doppelfunktion: Erstens kann während der Gewindeherstellung das Gewindeprofil des Gewindebohr-Werkzeugs belastungsfrei in der Umlaufnut drehen.

Zweitens bildet die Umlaufnut beim Verschrauben einer Befestigungsschraube einen Ausgleichsraum, der Schraubenlängen-Toleranzen der Befestigungsschraube kompensiert. Die Schraubenlänge einer solchen Befestigungsschraube ist herstellungsbedingt stark toleranzbehaftet. Mit Hilfe der Umlaufnut kann die toleranzbehaftete Befestigungsschraube prozesssicher verschraubt werden, ohne dass die Gewindetiefe der Gewindebohrung erhöht werden muss, wie es im Stand der Technik erforderlich wäre.

Die Erfindung und ihre vorteilhaften Aus- und Weiterbildungen sowie deren Vorteile werden nachfolgend anhand von Zeichnungen näher erläutert.

Es zeigen:
- Figur 1: in einer Seitenschnittdarstellung ein in einem Werkstück ausgebildetes Gewindesackloch;
- Figur 2: in einer Ansicht von vorne eine nicht erfindungsgemäße Vergleichsform eines Gewindebohr-Werkzeugs;
- Figuren 3 und 4: jeweils unterschiedliche Seitenansichten des Gewindebohr-Werkzeugs;
- Figuren 5 bis 8: jeweils Ansichten, die Verfahrensschritte zur Erzeugung des in der Figur 1 gezeigten Gewindesackloches veranschaulichen;
- Figur 9: eine vergrößerte Teilansicht, in der eine Spanabfuhr während des Gewindebohr-Hubes veranschaulicht ist;
- Figur 10: eine vergrößerte Teilansicht, in der ein Materialabtrag während des Reversier-Hubes veranschaulicht ist;
- Figuren 11 bis 14: unterschiedliche Ansichten eines erfindungsgemäßen Gewindebohr-Werkzeugs gemäß einem Ausführungsbeispiel; und
- Figur 15: eine Ansicht entsprechend der Figur 10.

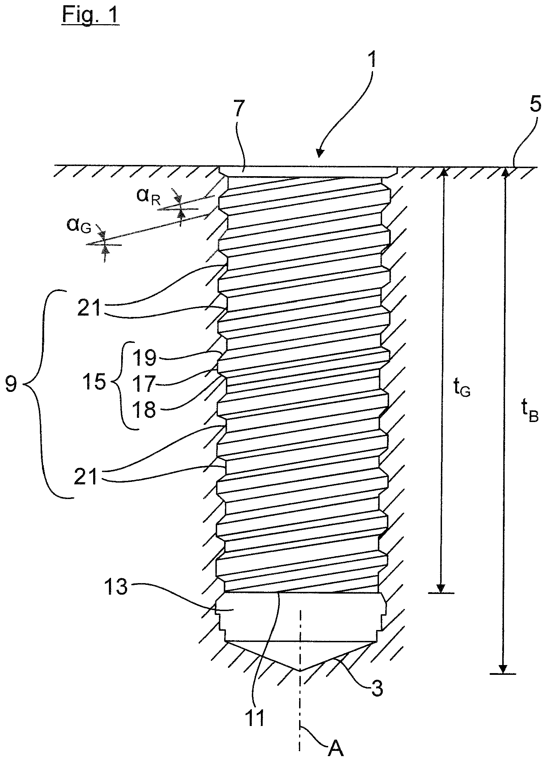

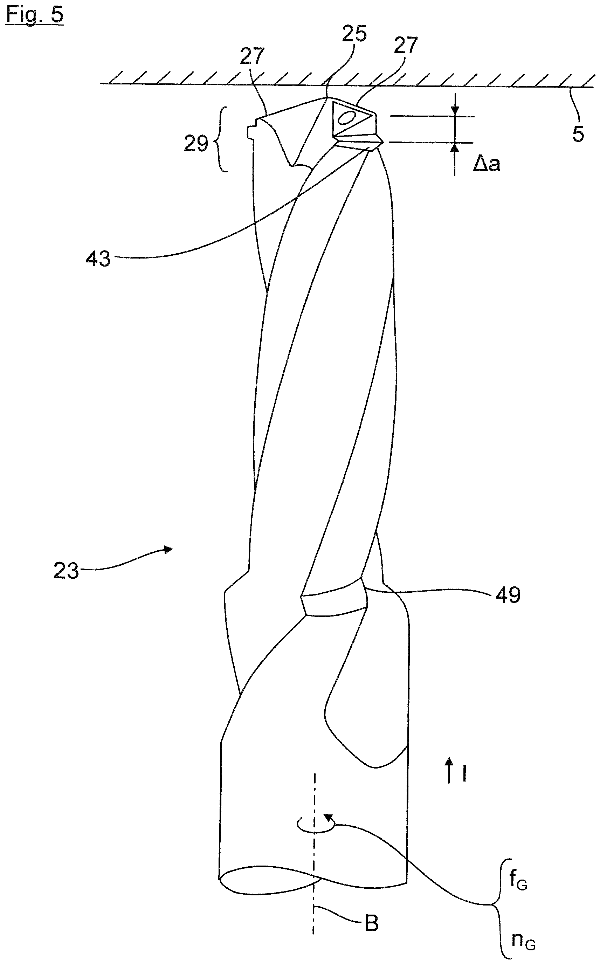

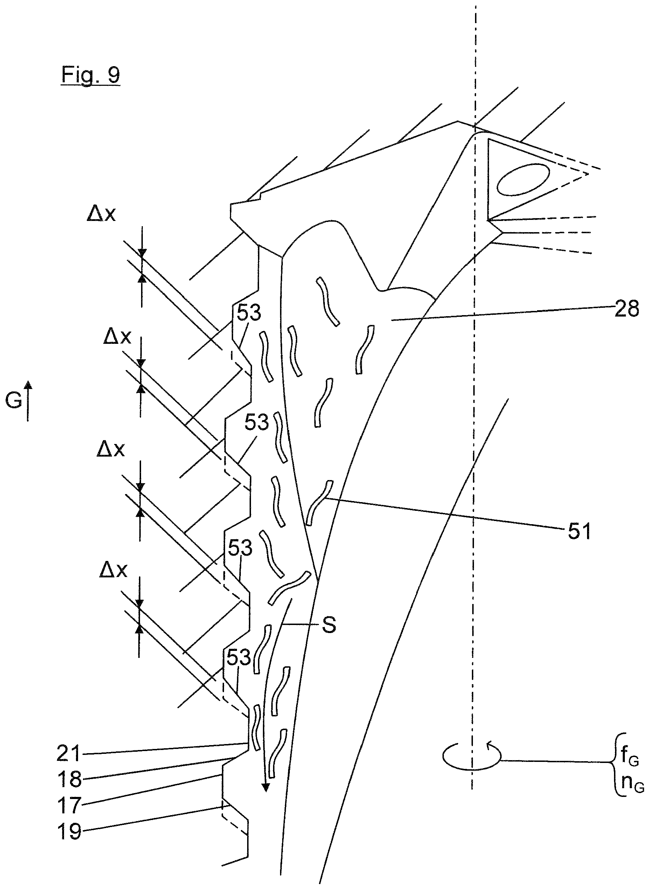

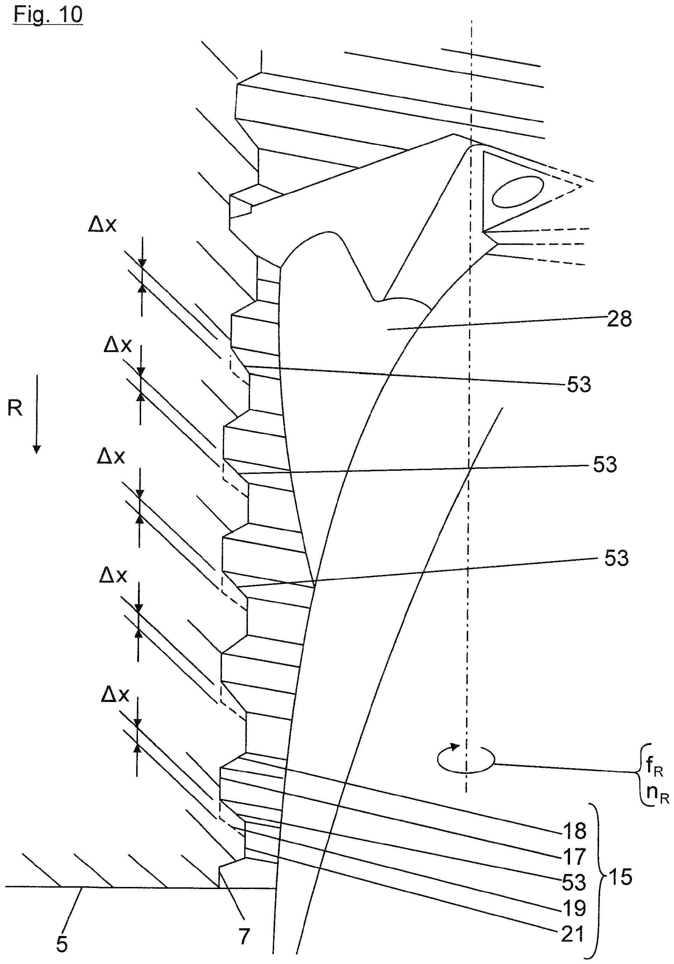

In der Figur 1 ist eine fertiggestellte Gewindesackloch-Bohrung 1 gezeigt. Die Bohrung 1 ist mit ihrem Bohrungsgrund 3 bis zu einer Soll-Bohrtiefe t_{B} in ein Werkstück 5 mittels einer sogenannten Einschuss-Bohrbearbeitung eingearbeitet, die später anhand der Figuren 5 bis 8 erläutert wird. Die Bohrung 1 weist an ihrer Bohrungsöffnung eine umlaufende Gewindesenkung 7 auf, die im weiteren Verlauf nach unten in ein Innengewinde 9 übergeht. Das Innengewinde 9 erstreckt sich entlang der Bohrungsachse A bis zu einer nutzbaren Soll-Gewindetiefe t_{G}. Wie aus der Figur 1 weiter hervorgeht, mündet ein Gewindegang 15 des Innengewindes 9 mit einem Gewindeauslauf 11 in einer Umlaufnut 13. Diese weist keine Gewindesteigung auf und ist, in der Axialrichtung betrachtet, zwischen dem Innengewinde 9 und dem Bohrungsgrund 3 ausgebildet. Der Gewindegang 15 weist einen radial äußeren Gewindegrund 17 sowie seitliche obere und untere Gewindeflanken 18, 19 auf, die radial innen in einen Gewinde-Innenscheitel 21 übergehen. Die in der Figur 1 oberen Gewindeflanken 19 sind die später anhand der Figuren 9 und 10 beschriebenen spänezugewandten Gewindeflanken, während die in der Figur 1 unteren Gewindeflanken 18 die späneabgewandten Gewindeflanken sind.

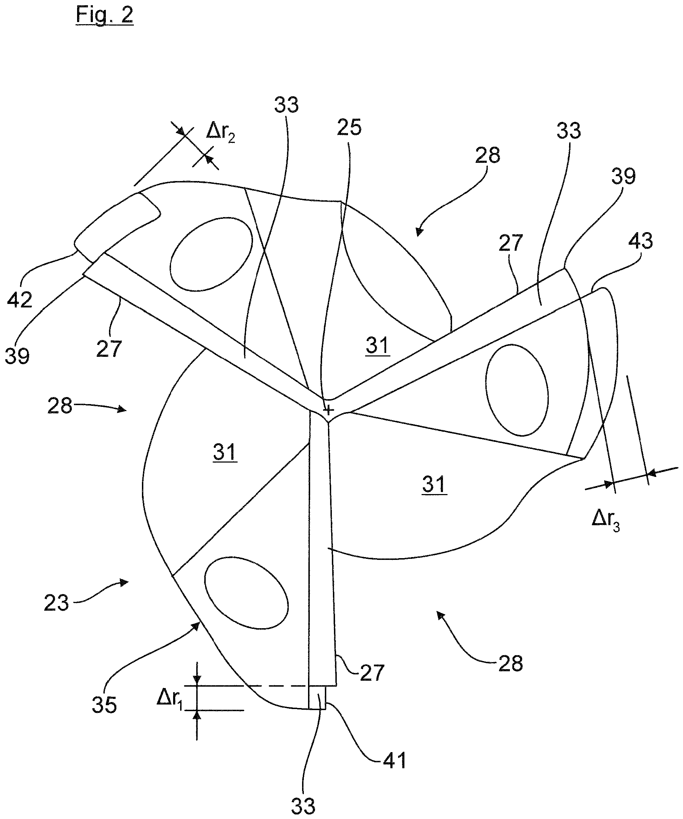

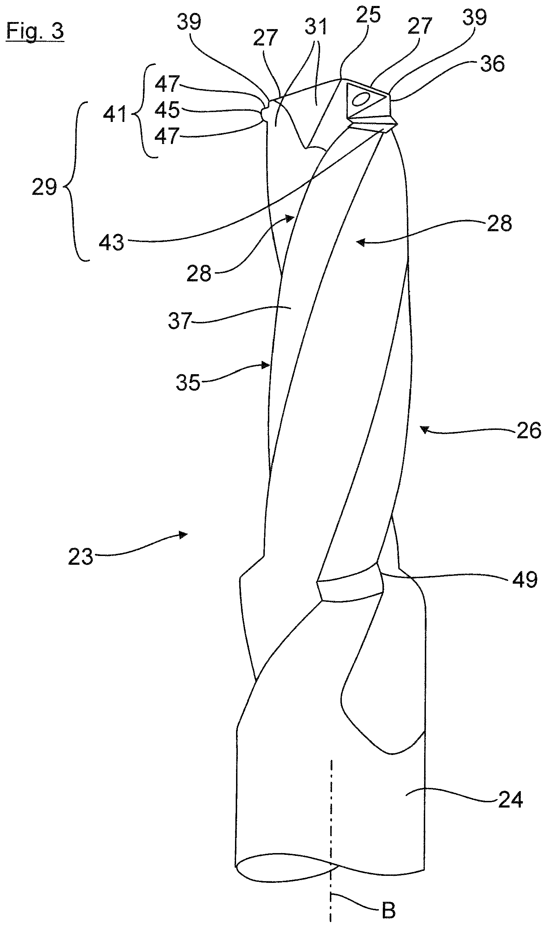

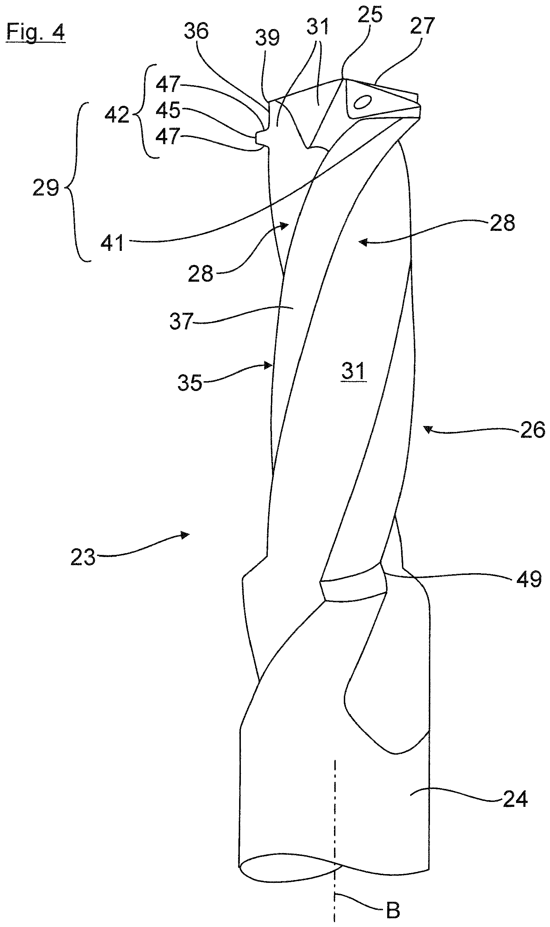

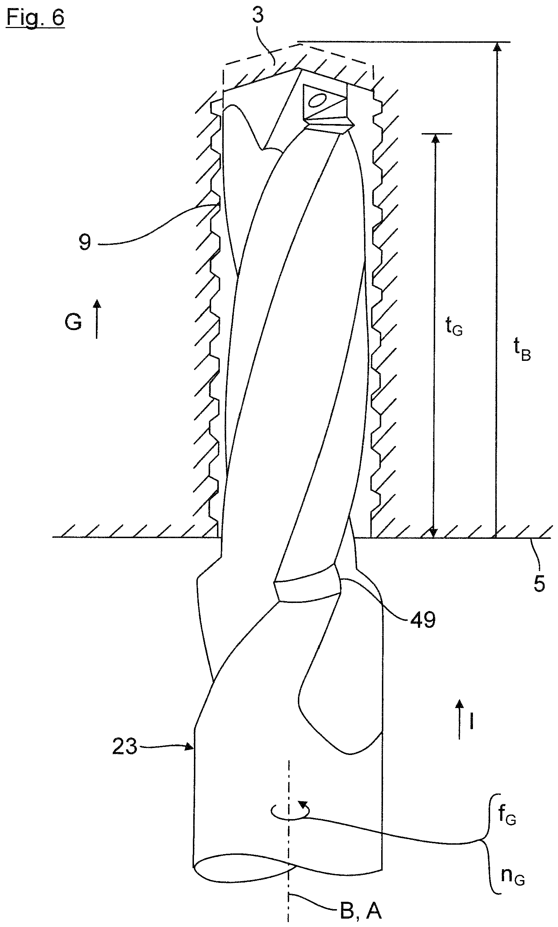

Die in der Figur 1 gezeigte Gewindesackloch-Bohrung 1 wird mit Hilfe eines nachfolgend anhand der Figuren 2 bis 4 beschriebenen Gewindebohr-Werkzeugs 23 durchgeführt. Demzufolge weist das Werkzeug 23 in der Figur 2 an seiner Bohrerspitze 25 drei gleichmäßig umfangsverteilte, stirnseitige Hauptschneiden 27 sowie ein in der Gewindebohr-Richtung I (Figur 5 oder 6) nacheilendes Gewindeprofil 29 auf.

Das Werkzeug 23 ist mit einem Spannschaft 24 sowie einem daran anschließenden Gewindebohr-Körper 26 aufgebaut, entlang dessen Bohrungsachse A sich insgesamt drei umfangsseitig verteilte Spannuten 28 bis zu der jeweiligen stirnseitigen Hauptschneide 27 an der Bohrerspitze 25 erstrecken.

An jeder Hauptschneide 27 läuft eine die Spannut 28 begrenzende Spanfläche 31 und eine stirnseitige Freifläche 33 der Bohrerspitze 25 zusammen. In der Werkzeug-Umfangsrichtung ist die jeweilige Spannut 28 durch einen Bohrersteg 35 begrenzt. Insgesamt weist das in den Figuren gezeigte Gewindebohr-Werkzeug 23 drei Bohrerstege 35 auf. Die Spanfläche 31 der Spannut 28 geht dabei unter Bildung einer Nebenschneide 36 in eine außenumfangsseitige Rückenfläche 37 des jeweiligen Bohrerstegs 35 über. Die Nebenschneide 36 und die stirnseitige Hauptschneide 27 laufen an einer radial äu-ßeren Haupt-Schneidenecke 39 zusammen.

An den außenumfangsseitigen Rückenflächen 37 der drei Bohrerstege 35 weist das Gewindeprofil 29 jeweils einen Vorschneidzahn 41, einen Mittelschneidzahn 42 und einen Fertigschneidzahn 43 auf. Jeder der Schneidzähne 41, 42, 43 ist mit einer radial äußeren Gewindegrund-Schneidkante 45 sowie Gewindeflanken-Schneidkanten 47 ausgebildet, um den in der Figur 1 gezeigten Gewindegang 15 zu schneiden/zu formen. Die Schneidzähne 41 bis 43 sind dabei in unterschiedlichen Geometrien ausgeführt sowie mit unterschiedlichen Axialabständen Δa (nur in der Figur 5 angedeutet) von der Bohrerspitze 25 beabstandet, um den in der Figur 1 gezeigten Gewindegang 15 des Innengewindes 9 zu schneiden. Zudem können die Vor-, Mittel- und Fertigschneidzähne 41, 42, 43 in der Radialrichtung unterschiedliche Zahnhöhen Δr₁, Δr₂, Δr₃ (Fig. 2) aufweisen. Exemplarisch können die Vor-, Mittel- und Fertigschneidzähne 41, 42, 43 in der Umfangsrichtung axial größer werden. Der Fertigschneidzahn 43 schneidet dann die gesamte Innengewinde-Kontur. Alternativ dazu kann der Fertigschneidzahn 43 auch als ein Formzahn ausgeführt sein, um die Gewindefestigkeit zu steigern.

Das Gewindebohr-Werkzeug 23 weist zudem am Übergang zwischen dem Gewindebohr-Körper 26 und dem Spannschaft 24 eine Schneidkante 49 zur Bildung der in der Figur 1 gezeigten Gewindesenkung 7 auf.

Nachfolgend wird anhand der Figuren 5 bis 8 das Verfahren zur Erzeugung der in der Figur 1 gezeigten Gewindesackloch-Bohrung 1 beschrieben: Demzufolge wird in der Figur 5 das Gewindebohr-Werkzeug 23 in einer Gewindebohr-Richtung I auf das noch nicht vorgebohrte Werkzeug 5 geführt und eine Einschuss-Bohrung durchgeführt. In einem Gewindebohr-Hub G erzeugen die Hauptschneiden 27 eine Kernlochbohrung und das nacheilende Gewindeprofil 29 das Innengewinde 9 an der Innenwandung der Kernlochbohrung. Der Gewindebohr-Hub G erfolgt bei einem Gewindebohr-Vorschub f_{G} und bei damit synchronisierter Gewindebohr-Drehzahl n_{G} in einer Gewindebohr-Drehrichtung, und zwar bis die Soll-Gewindetiefe t_{G} erreicht ist (Figur 6).

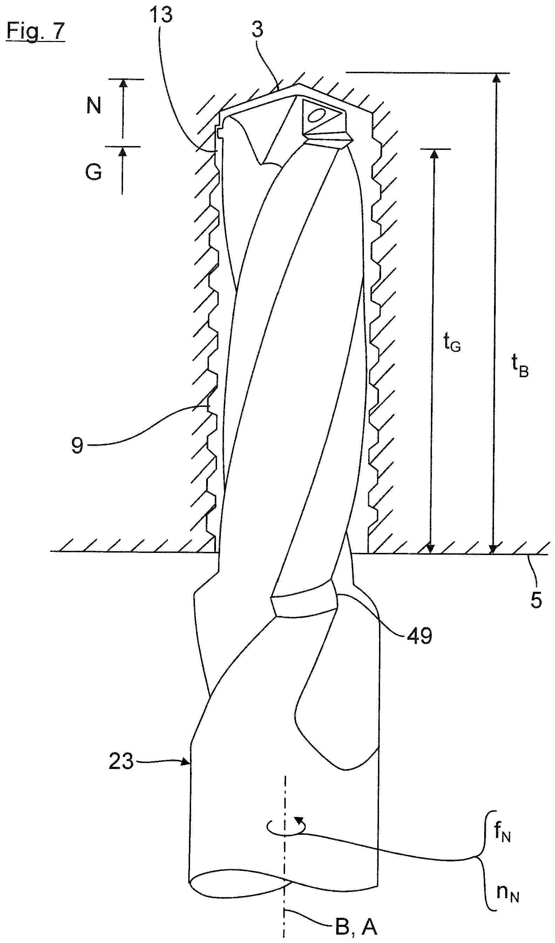

Unmittelbar anschließend wird ein Nutformschritt (Figur 7) durchgeführt, bei dem der Gewindebohr-Hub G in der Gewindebohr-Richtung I um einen Nutform-Hub N verlängert wird. Im Unterschied zum Gewindeform-Hub G sind im Nutform-Hub H der Nutform-Vorschub f_{N} und die Nutform-Drehzahl n_{N} des Gewindebohr-Werkzeugs 23 nicht zueinander synchronisiert sowie unterschiedlich zum vorangegangenen Gewindebohr-Vorschub f_{G} und zur Gewindebohr-Drehzahl nc.

Auf diese Weise erzeugt das Gewindeprofil 29 mit seinen Vor-, Mittel- und Fertigschneidzähnen 41, 42, 43 die in der Figur 7 gezeigte Umlaufnut 13, in der das Gewindeprofil 29 belastungsfrei drehen kann. Der Nutform-Vorschub f_{N} sowie die Nutform-Drehzahl n_{N} sind so ausgelegt, dass eine übermäßig große Schneidenbelastung der Schneidzähne 41 bis 43 verhindert ist.

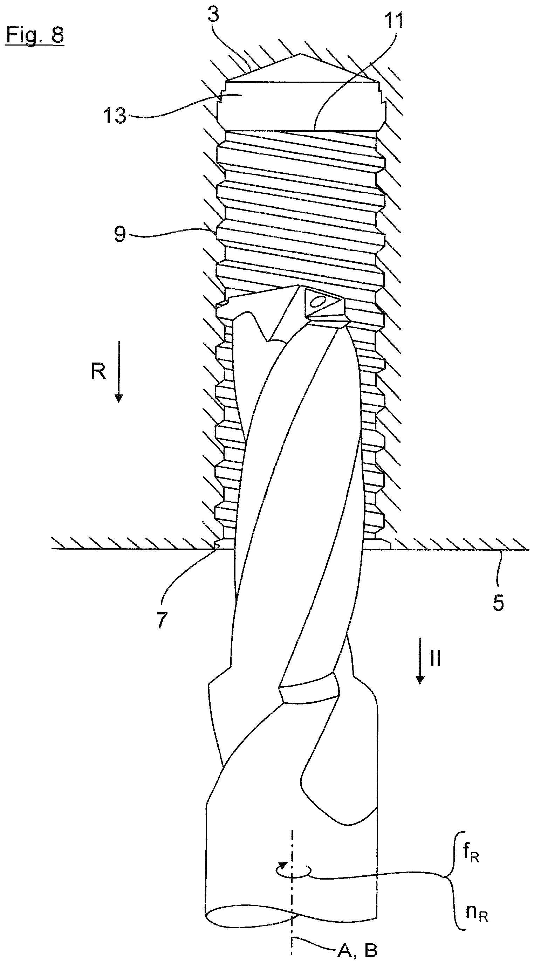

Bei Erreichen der Soll-Bohrungstiefe t_{B} wird sowohl der Nutform-Vorschub f_{N} als auch die Nutform-Drehzahl n_{N} auf 0 reduziert. Anschließend erfolgt zur Vorbereitung eines Reversier-Hubes R (Figur 8) eine Drehrichtungsumkehr. Im Reversier-Hub R (Figur 8) wird das Gewindebohr-Werkzeug 23 in einer Reversier-Richtung II (Figur 8) aus der Gewindebohrung 1 herausgeführt, und zwar mit einem entgegengesetzten Reversier-Vorschub f_{R} sowie damit synchronisierter Reversier-Drehzahl n_{R}. Diese Parameter sind so bemessen, dass das Gewindeprofil 29 des Gewindebohr-Werkzeugs 23 nicht belastungsfrei, sondern unter spanabhebender Belastung im Gewindegang 15 des Innengewindes 9 aus der Gewindebohrung 1 geführt wird. Auf diese Weise wird, wie später noch beschrieben, eine Kollisionskontur 53 (Figur 9 oder 10), die noch an den Gewindeflanken 19 des Innengewindes 9 ausgebildet ist, abgetragen.

Beim Start des Reversier-Hubes R wird das Gewindebohr-Werkzeug 23 von der Fertigungsanlage so angesteuert, dass die Schneidzähne 41, 42, 43 jeweils unter spanabhebender Belastung in den Gewindegang-Auslauf 11, der in die Umlaufnut 13 mündet, eingefahren werden. Im weiteren Verlauf des Reversier-Hubes R wird das Gewindeprofil 29 des Gewindebohr-Werkzeugs 23 dann unter spanabhebender Belastung (das heißt die Kollisionskontur 53 wird abgetragen) durch den Gewindegang 15 des Innengewindes 9 nach außen gedreht.

In der Figur 9 ist der in der Figur 6 veranschaulichte Gewindebohr-Hub G detailliert dargestellt. Demzufolge wird das Gewindebohr-Werkzeug 23 mit dem vordefinierten Gewindebohr-Vorschub f_{G} sowie mit der damit synchronisierten Gewindebohr-Drehzahl n_{G} in der Gewindebohr-Richtung I in das Werkstück 5 eingetrieben. Dabei werden Späne 51 erzeugt, die in einer zur Gewindebohr-Richtung I gegenläufigen Spanabfuhrrichtung S aus der Gewindebohrung 1 gedrückt werden. Die in der Spanabfuhrrichtung S aus der Gewindebohrung 1 geförderten Späne 51 kollidieren dabei mit den spänezugewandten Gewindeflanken 19 des Innengewindes 5.

Erfindungsgemäß wird im Gewindebohr-Hub I - mit Ausnahme der spänezugewandten Gewindeflanken 19 des Innengewindes 9 - die komplette Innengewinde-Geometrie bereits auf Fertigmaß hergestellt, und zwar im Einzelnen die späneabgewandten Gewindeflanken 18, der radial innere Gewinde-Innenscheitel 21 sowie der radial äußere Gewindegrund 17. Im Unterschied dazu sind die spänezugewandten Gewindeflanken 19 des Innengewindes 9 nach dem Gewindebohr-Hub I noch nicht auf ein Fertigmaß hergestellt, sondern vielmehr mit einem zusätzlichen Flanken-Aufmaß Δx (Figur 9) hergestellt. Auf diese Weise ist an den spänezugewandten Gewindeflanken 19 eine Kollisionskontur 53 bereitgestellt, mit der die abzuführenden Späne 51 kollidieren.

Die obige Kollisionskontur 53 an den spänezugewandten Gewindeflanken 19 wird im anschließenden Reversier-Hub R bis auf das Fertigmaß abgetragen. Hierzu wird das Gewindebohr-Werkzeug 23 im Nutformschritt derart in Axialrichtung positioniert, dass beim Start des Reversier-Hubes R das Gewindebohr-Werkzeug 23 so angesteuert wird, dass das Gewindeprofil 29 unter spanabhebender Belastung, das heißt unter Materialabtrag, in den Gewindegang-Auslauf 11 (Figur 1), der in die Umlaufnut mündet, eingefahren wird.

Durch entsprechende Einstellung des Reversier-Vorschubes f_{R} und der damit synchronisierten Reversier-Drehzahl r_{R} ergibt sich im Reversier-Hub R eine Reversier-Gewindesteigung α_{R} für die spänezugewandten Gewindeflanken 19 im Innengewinde 9. Die Reversier-Gewindesteigung α_{R} der spänezugewandten Gewindeflanke 19 kann identisch zu der Gewindebohr-Gewindesteigung α_{G} sein oder davon unterschiedlich, um gegebenenfalls ein belastungsoptimiertes Innengewinde-Design zu erzielen.

Auf diese Weise können unterschiedliche Flankendurchmesser bei unterschiedlichen Legierungen des Werkstückes 5 eingestellt werden, wobei der jeweilige Flankendurchmesser jeweils speziell an die eingesetzte Werkstück-Legierung angepasst ist. Darüber hinaus ist es auch möglich, die Gewindezähne des Gewindeprofils im Rahmen einer Werkzeug-Nachbearbeitung nachzuschleifen. In diesem Fall würde sich der Axialversatz vergrößern, um den das Werkzeug im Nutformschritt zu Beginn des Reversier-Hubes R in Axialrichtung zu verstellen ist, um einen entsprechenden Materialeingriff in die spänezugewandten Gewindeflanken 19 zu erzielen.

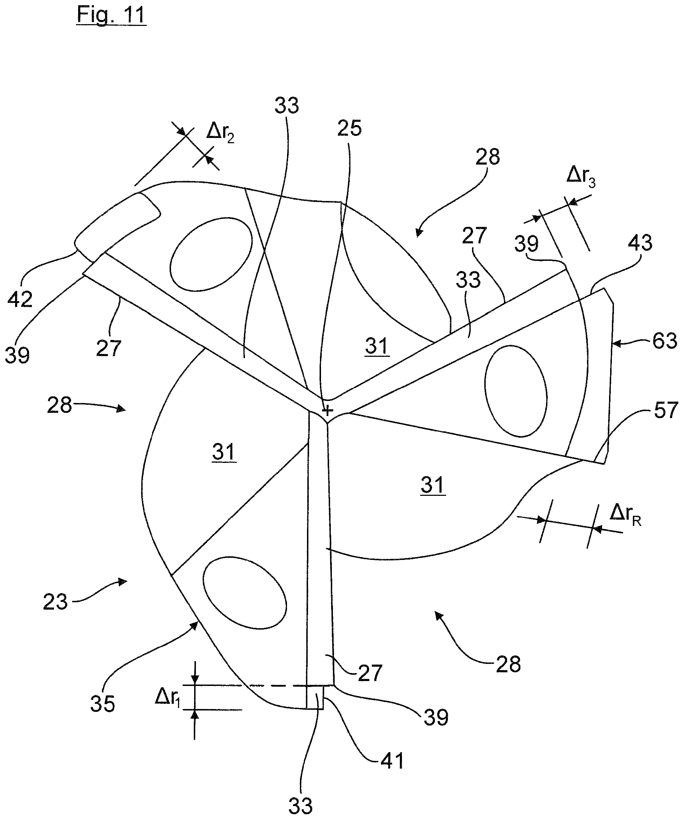

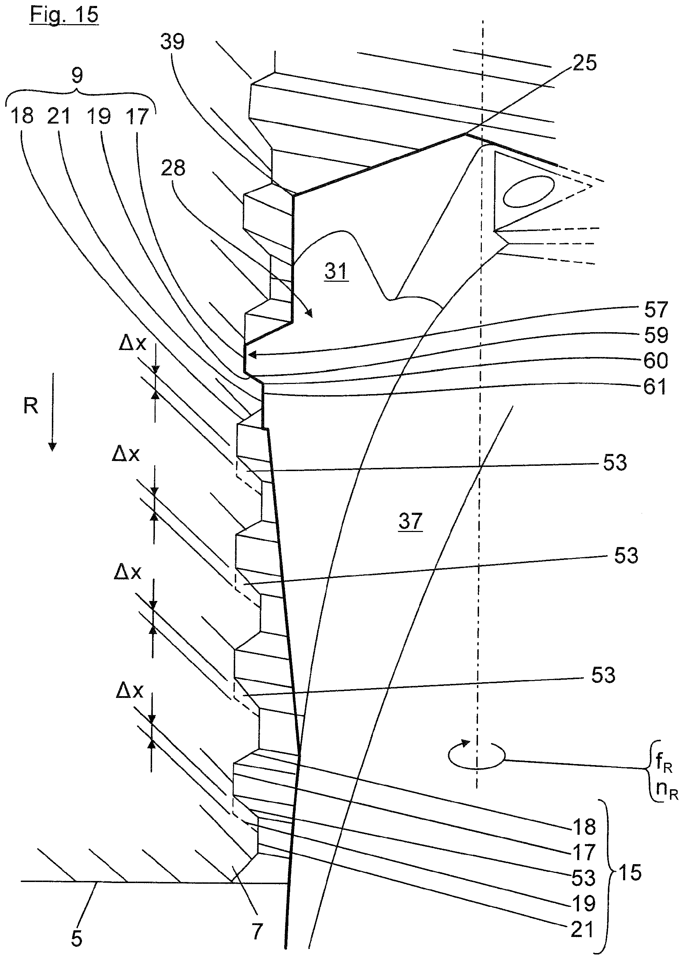

Nachfolgend werden anhand der Figuren 11 bis 15 der Aufbau und die Wirkungsweise eines Gewindebohr-Werkzeugs gemäß einem Ausführungsbeispiel beschrieben. Das in der Figur 11 gezeigte Gewindebohr-Werkzeug entspricht grundsätzlich dem der vorangegangenen Figuren. Von daher wird auf die Vorbeschreibung verwiesen. Das in der Figur 11 gezeigte Gewindebohr-Werkzeug weist zusätzlich einen Reversierzahn 57 auf, mit dem im später anhand der Figur 15 beschriebenen Reversier-Hub R das Flanken-Aufmaß Δx von der spänezugewandten Gewindeflanke 19 betriebssicher abgetragen wird.

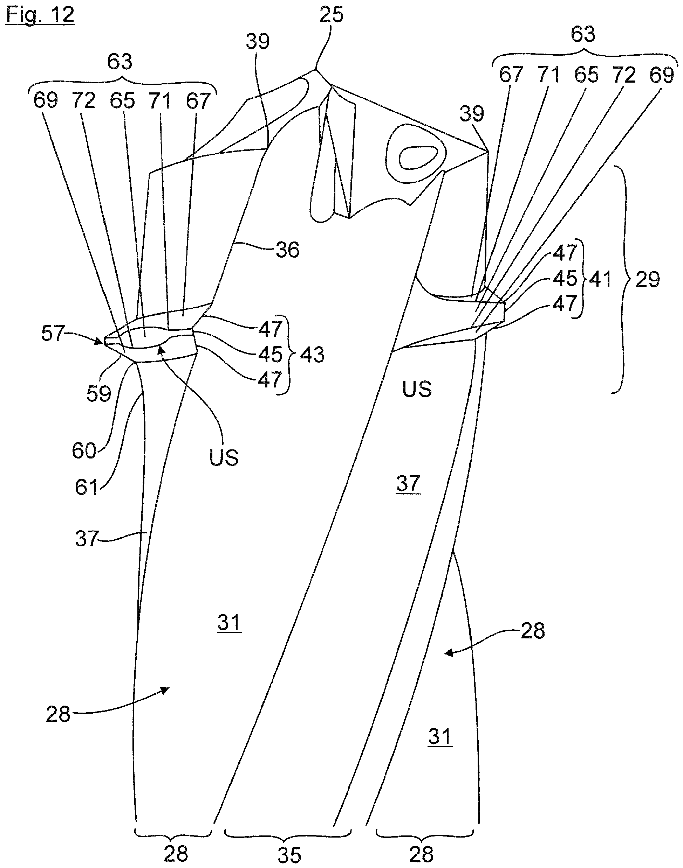

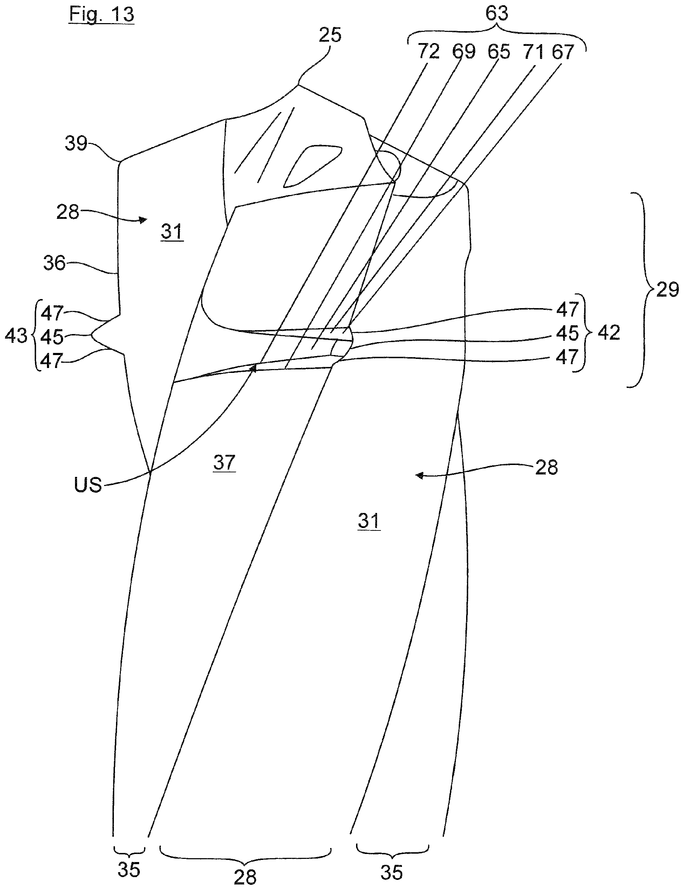

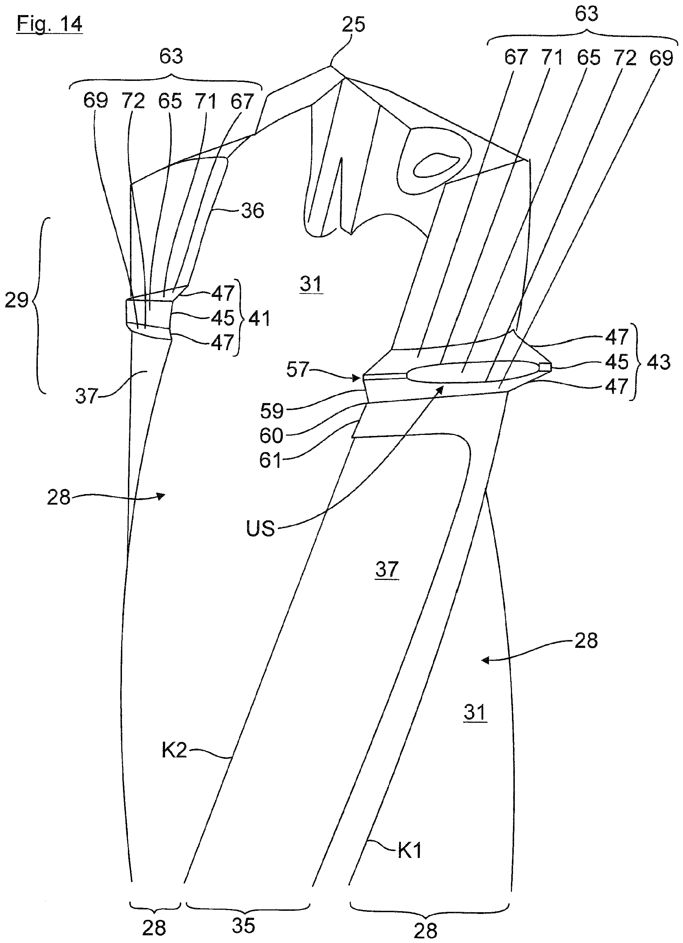

Die Figuren 12 bis 14 betreffen unterschiedliche Seitenansichten des Gewindebohr-Werkzeugs. In der Figur 12 ist der Vorbearbeitungszahn 41, der Endbearbeitungszahn 43 sowie der Reversierzahn 57 gezeigt. In der Figur 13 ist der Mittelzahn 42 sowie der Endbearbeitungszahn 43 gezeigt, während in der Figur 14 der Endbearbeitungszahn 43, der Reversierzahn 57 und der Vorbearbeitungszahn 41 gezeigt ist.

Der Reversierzahn 57 ist in den Figuren 12, 14, 15 mit einer Gewindeflanken-Schneid-/Formkante 59 ausgebildet. Im Reversier-Hub R wird das Gewindebohr-Werkzeug so angesteuert, dass deren Gewindeflanken-Schneid-/Formkante 59 das Flanken-Aufmaß Δx von den spänezugewandten Gewindeflanken 19 bis auf das Fertigmaß abträgt oder formt.

Der Reversierzahn 57 ist, wie auch die Gewindeprofilzähne 41, 42, 43 auf der Bohrersteg-Rückenfläche 37 ausgebildet. Der Reversierzahn 57 überragt dabei die Haupt-Schneidenecke 39 um eine Reversier-Zahnhöhe Δr_{R} (Figur 11) radial nach außen. Die Gewindeflanken-Schneidkante 59 des Reversierzahns 57 geht in der Figur 14 oder 15 an einer radial inneren Schneiden-Innenecke 60 in eine Reversier-Schneide 61 über, die ebenfalls im Reversier-Hub H aktiv ist. Von daher erfolgt im Reversier-Hub R nicht nur eine Bearbeitung (zum Beispiel Spanbearbeitung) der spänezugewandten Gewindeflanken 19 des Bohrloch-Innengewindes 9, sondern gleichzeitig auch eine Entgratung der Gewinde-Innenscheitel 21 des Innengewindes 9, wie es in der Figur 15 angedeutet ist. Bei dieser Entgratung wird eine Grat-Bildung am Gewinde-Innenscheitel 21 vermieden, die sich ansonsten während der Bearbeitung der spänezugewandten Gewindeflanken 19 ergeben würde.

Wie aus den Figuren 12 bis 15 weiter hervorgeht, laufen an der Reversier-Schneide 61 die außenumfangsseitige Bohrersteg-Rückenfläche 37 und die Spanfläche 31 der Spannut 28 zusammen. Die Reversier-Schneide 61 und die Nebenschneide 36 verlaufen daher beide entlang der Bohrer-Längsrichtung und sind an, in der Bohrer-Umfangsrichtung gegenüberliegenden Bohrersteg-Längskanten K1, K2 (Figur 14) ausgebildet.

Um ein stabiles Gewindeprofil 29 am Gewindebohr-Werkzeug auszubilden, schließt sich an jedem Gewindeprofilzahn 41, 42, 43 und am Reversierzahn 57 jeweils ein Zahnsteg 63 an. Dieser ist jeweils auf der Bohrersteg-Rückenfläche 37 ausgebildet. Dadurch ist der jeweilige Gewindeprofilzahn 41, 42, 43 und der Reversierzahn 57 im Gewindebohr-Hub G und/oder im Reversier-Hub R vor einem frühzeitigen Werkzeugbruch geschützt. Wie aus der Figur 14 hervorgeht, ist der Gewindeprofilzahn 43 und der Reversierzahn 57 über einen, auf der Bohrersteg-Rückenfläche 37 ausgebildeten Zahnsteg 63 miteinander verbunden. Der Zahnsteg 63 weist eine radial äußere Steg-Scheitelfläche 65 sowie eine der Bohrerspitze 25 zugewandte Steg-Flankenfläche 67 und eine der Bohrerspitze 25 abgewandte Steg-Flankenfläche 69 auf. Um die Werkzeug-Belastung während des Gewindebohr-Hubs G und/oder während des Reversier-Hubs R zu reduzieren, können die oben erwähnten Stegflächen 65, 67, 69 zumindest teilweise als Freiflächen ausgebildet sein, die im Gewindebohr-Hub G und/oder im Reversier-Hub R im Wesentlichen funktionslos sind.

Gemäß den Figuren 12 bis 14 geht die Steg-Scheitelfläche 65 des Zahnstegs 63 an einer ersten Umfangs-Stegkante 71 in die, der Bohrerspitze 25 zugewandte Steg-Flankenfläche 67 über. Zudem geht die Steg-Scheitelfläche 65 in einer zweiten Umfangs-Stegkante 72 in die, der Bohrerspitze 25 abgewandte Steg-Flankenfläche 69 über. Im Hinblick auf eine reduzierte Werkzeug-Belastung während des Nutform-Hubs N weist das Gewindebohr-Werkzeug eine Umlaufnut-Schneide US (Figur 12 bis 14) auf, um im Nutform-Hub N die Umlaufnut 13 herzustellen. In der dargestellten Ausführungsvariante ist die Umlaufnut-Schneide US speziell mittels der zweiten Umfangs-Stegkante 72 realisiert.

## Patentansprüche

1. Gewindebohr-Werkzeug zur Erzeugung einer Gewindebohrung (1) mit Innengewinde (9) in einem Werkstück (5), wobei in einem Gewindebohr-Hub (G) das Gewindebohr-Werkzeug (23) in das Werkstück (5) eintreibbar ist, und in einem Reversier-Hub (R) das Gewindebohr-Werkzeug (23) aus der Gewindebohrung (1) herausführbar ist, wobei das Gewindebohr-Werkzeug (23) einen Spannschaft (24) und einen daran anschließenden Gewindebohr-Körper (26) aufweist und sich entlang der Längsachse (A) des Gewindebohr-Körpers (26) zumindest eine Spannut (28) bis zu einer stirnseitigen Hauptschneide (27) an der Bohrerspitze (25) erstreckt, an welcher Hauptschneide (27) eine die Spannut (28) begrenzende Spanfläche (31) und eine stirnseitige Freifläche (33) der Bohrerspitze (25) zusammenlaufen, wobei in der Werkzeug-Umfangsrichtung die Spannut (28) durch zumindest einen Bohrersteg (35) begrenzt ist und die Spanfläche (31) der Spannut (28) unter Bildung einer Nebenschneide (36) in eine außenumfangsseitige Rückenfläche (37) des Bohrerstegs (35) übergeht, und wobei die Nebenschneide (36) und die stirnseitige Hauptschneide (27) an einer radial äußeren Haupt-Schneidenecke (39) zusammenlaufen, wobei an der außenumfangseitigen Rückenfläche (37) des Bohrerstegs (35) ein Gewindeprofil (29) mit zumindest einem Gewindeprofilzahn (41, 42, 43) ausgebildet ist, **dadurch gekennzeichnet, dass** das Werkzeug-Gewindeprofil (29) zumindest einen Reversierzahn (57) mit einer Gewindeflanken-Schneid-/Formkante (59) aufweist, mittels der beim Reversier-Hub (R) ein Flanken-Aufmaß (Δx) von den Gewindeflanken (19) abtragbar und/oder formbar ist, wobei die Gewindeflanken (19) Gewindeflanken (19) des herzustellenden Innengewindes (9) sind, die beim Gewindebohr-Hub (G) den abzuführenden Spänen (51) zugewandt sind.

2. Gewindebohr-Werkzeug nach Anspruch 1, **dadurch gekennzeichnet, dass** im Gewindebohr-Hub (G) das Gewindebohr-Werkzeug (23) mit einem Gewindebohr-Vorschub (f_{G}) in der Gewindebohr-Richtung (I) und mit einer damit synchronisierten Gewindebohr-Drehzahl (n_{G}) in das Werkstück (5) eintreibbar ist und die Werkzeug-Hauptschneide (27) eine Kernlochbohrung erzeugt sowie das Werkzeug-Gewindeprofil (29) das Innengewinde (9) an der Innenwandung der Kernlochbohrung bildet, und/oder dass im Reversier-Hub (R) das Gewindebohr-Werkzeug (23) mit entgegengesetztem Reversier-Vorschub (f_{R}) sowie damit synchronisierter Reversier-Drehzahl (n_{R}) in der Reversier-Richtung (II) aus der Gewindebohrung (1) herausführbar ist, so dass das Werkzeug-Gewindeprofil (29) im Gewindegang (15) des Innengewindes (9) aus der Gewindebohrung (1) führbar ist, und/oder dass im Gewindebohr-Hub (G) Späne (51) erzeugt werden, die in einer zur Gewindebohr-Richtung (I) gegenläufigen Spanabfuhrrichtung (S) aus der Gewindebohrung (1) gefördert werden und dabei mit den Gewindeflanken (19) des Innengewindes (9) kollidieren, die den abzuführenden Spänen (51) zugewandt sind.

3. Gewindebohr-Werkzeug nach einem der Ansprüche 1 oder 2, **dadurch gekennzeichnet, dass** der auf der Bohrersteg-Rückenfläche (37) ausgebildete Reversierzahn (57) die Haupt-Schneidenecke (39) um eine Reversier-Zahnhöhe (Δr_{R}) radial nach außen überragt, und/oder dass die Gewindeflanken-Schneidkante (59) des Reversierzahns (57) an einer radial inneren Schneiden-Innenecke (60) in eine Reversier-Schneide (61) übergeht, und dass mittels der Reversier-Schneide (61) im Reversier-Hub (R) der Gewinde-Innenscheitel (21) entgratet wird.

4. Gewindebohr-Werkzeug nach Anspruch 3, **dadurch gekennzeichnet, dass** die Reversier-Schneide (61) in Bohrer-Längsrichtung verläuft, und/oder dass an der Reversier-Schneide (61) die außenumfangsseitige Bohrersteg-Rückenfläche (37) und die Spanfläche (31) der Spannut (28) zusammenlaufen, und/oder dass die Reversier-Schneide (61) und die Nebenschneide (36) an, in der Bohrer-Umfangsrichtung gegenüberliegenden Bohrersteg-Längskanten (K1, K2) ausgebildet sind.

5. Gewindebohr-Werkzeug nach einem der vorhergehenden Ansprüche, **dadurch gekennzeichnet, dass** sich in Bohrer-Umfangsrichtung ein auf der Bohrersteg-Rückenfläche (37) ausgebildeter Zahnsteg (63) an den zumindest einen Gewindeprofilzahn (41, 42, 43) und/oder an den Reversierzahn (57) anschließt, und/oder dass die Gewindeprofilzähne (41, 42, 43) und/oder der Reversierzahn (57) jeweils als Formzahn mit entsprechenden Formkanten und/oder als Schneidzahn mit entsprechenden spanabhebenden Schneidkanten oder als eine Kombination daraus ausgebildet sind.

6. Gewindebohr-Werkzeug nach einem der vorhergehenden Ansprüche, **dadurch gekennzeichnet, dass** der Reversierzahn (57) und der Gewindeprofilzahn (43) über einen, auf der Bohrersteg-Rückenfläche (37) ausgebildeten Zahnsteg (63) miteinander verbunden sind, und/oder dass der Zahnsteg (63) in der Bohrer-Umfangsrichtung voneinander abgewandte Stirnseiten aufweist, die jeweils den Gewindeprofilzahn (43) und den Reversierzahn (57) bilden.

7. Gewindebohr-Werkzeug nach einem der vorhergehenden Ansprüche, **dadurch gekennzeichnet, dass** der Zahnsteg (63) eine radial äußere Steg-Scheitelfläche (65) sowie eine der Bohrerspitze (25) zugewandte Steg-Flankenfläche (67) und eine der Bohrerspitze (25) abgewandte Steg-Flankenfläche (69) aufweist, und/oder dass die Stegflächen (65, 67, 69) zumindest teilweise als Freiflächen ausgebildet sind, die im Gewindebohr-Hub (G) und/oder im Reversier-Hub (R) funktionslos sind, und dass die Steg-Scheitelfläche (65) an einer ersten Umfangs-Stegkante (71) in die, der Bohrerspitze (25) zugewandte Steg-Flankenfläche (67) übergeht, und/oder dass die Steg-Scheitelfläche (65) an einer zweiten Umfangs-Stegkante (72) in die, der Bohrerspitze (25) abgewandte Steg-Flankenfläche (69) übergeht, und dass zumindest eine der beiden Umfangs-Stegkanten (71, 72) als eine Umlaufnut-Schneide (US) ausgebildet ist, mittels der im Nutform-Hub (N) die an das Bohrloch-Innengewinde (9) anschließende Umlaufnut (13) spanend gebildet wird.

8. Verfahren zur Erzeugung einer Gewindebohrung (1) in einem Werkstück (5) mittels eines Gewindebohr-Werkzeugs nach einem der vorhergehenden Ansprüche.

9. Verfahren nach Anspruch 8, **dadurch gekennzeichnet, dass** zwischen dem Gewindebohr-Hub (G) und dem Reversier-Hub (R) ein Nutformschritt erfolgt, bei dem der Gewindebohr-Hub (G) in der Gewindebohr-Richtung (I) um einen Nutform-Hub (N) verlängert wird, und zwar unter Bildung einer an das Innengewinde (9) anschließenden Umlaufnut (13) ohne Gewindesteigung, in der das Gewindeprofil (29) des Innengewindes (9) belastungsfrei drehen kann, und/oder dass durch die Bereitstellung der Umlaufnut (13) es außerdem ermöglicht ist, dass das Gewindebohr-Werkzeug (23) mit einer Schneidkante (49) eine umlaufende Gewindesenkung (7) in der Bohrungsöffnung der Bohrung (1) erzeugt, wobei die umlaufende Gewindesenkung (7) während des obigen Nutformschrittes erzeugt wird.

## Claims

1. Tapping tool for producing a threaded bore (1) having an internal thread (9) in a workpiece (5), wherein the tapping tool (23) can be driven into the workpiece (5) in a tapping stroke (G), and the tapping tool (23) can be guided out of the threaded bore (1) in a reversing stroke (R), wherein the tapping tool (23) has a clamping shaft (24) and an adjoining tapping body (26) and along the longitudinal axis (A) of the tapping body (26) at least one flute (28) extends up to a frontal main cutting edge (27) on the drill tip (25), on which main cutting edge (27) a rake face (31) delimiting the flute (28) and a frontal free surface (33) of the drill tip (25) converge, wherein the flute (28) is delimited by at least one drill web (35) in the circumferential direction of the tool and the rake face (31) of the flute (28) merges into an outer circumferential rear face (37) of the drill web (35), forming a secondary cutting edge (36), and wherein the secondary cutting edge (36) and the frontal main cutting edge (27) converge at a radially outer main cutting edge corner (39), wherein a thread profile (29) having at least one thread profile tooth (41, 42, 43) is formed on the outer circumferential rear face (37) of the drill web (35), **characterised in that** the tool thread profile (29) has at least one reversing tooth (57) having a thread flank cutting/forming edge (59), by means of which a flank allowance (Δx) can be removed and/or formed from the thread flanks (19) during the reversing stroke (R), wherein the thread flanks (19) are thread flanks (19) of the internal thread (9) to be produced which face the chips (51) to be removed during the tapping stroke (G).

2. Tapping tool according to claim 1, **characterised in that** in the tapping stroke (G), the tapping tool (23) can be driven into the workpiece (5) at a tapping feed rate (f_{G}) in the tapping direction (I) and at a tapping speed (n_{G}) synchronised therewith, and the tool main cutting edge (27) produces a core hole bore and the tool thread profile (29) forms the internal thread (9) on the inner wall of the core hole bore, and/or **in that** in the reversing stroke (R), the tapping tool (23) can be guided out of the threaded bore (1) in the reversing direction (II) at the opposite reversing feed rate (f_{R}) and at a reversing speed (n_{R}) synchronised therewith, so that the tool thread profile (29) can be guided in the thread turn (15) of the internal thread (9) out of the threaded bore (1), and/or **in that** chips (51) are produced in the tapping stroke (G) which are conveyed out of the threaded bore (1) in a chip removal direction (S) opposite to the tapping direction (I) and collide with the thread flanks (19) of the internal thread (9) which face the chips (51) to be removed.

3. Tapping tool according to any one of claims 1 or 2, **characterised in that** the reversing tooth (57) formed on the drill web rear face (37) protrudes radially outwards beyond the main cutting edge corner (39) by a reversing tooth height (Δr_{R}), and/or **in that** the thread flank cutting edge (59) of the reversing tooth (57) merges into a reversing cutting edge (61) at a radially inner cutting edge inside corner (60), and **in that** the inner thread vertex (21) is deburred by means of the reversing cutting edge (61) in the reversing stroke (R).

4. Tapping tool according to claim 3, **characterised in that** the reversing cutting edge (61) extends in the drill longitudinal direction, and/or **in that** the outer circumferential drill web rear face (37) and the rake face (31) of the flute (28) converge at the reversing cutting edge (61), and/or **in that** the reversing cutting edge (61) and the secondary cutting edge (36) are formed on drill web longitudinal edges (K1, K2) opposite one another in the drill circumferential direction.

5. Tapping tool according to any one of the preceding claims, **characterised in that** a tooth web (63) formed on the drill web rear face (37) adjoins the at least one thread profile tooth (41, 42, 43) and/or the reversing tooth (57) in the drill circumferential direction, and/or **in that** the thread profile teeth (41, 42, 43) and/or the reversing tooth (57) are each formed as a forming tooth with corresponding forming edges and/or as a cutting tooth with corresponding chip-removing cutting edges or as a combination thereof.

6. Tapping tool according to any one of the preceding claims, **characterised in that** the reversing tooth (57) and the thread profile tooth (43) are connected to one another via a tooth web (63) formed on the drill web rear face (37), and/or **in that** the tooth web (63) has end faces facing away from one another in the drill circumferential direction, which respectively form the thread profile tooth (43) and the reversing tooth (57).

7. Tapping tool according to any one of the preceding claims, **characterised in that** the tooth web (63) has a radially outer web vertex surface (65) and a web flank surface (67) facing the drill tip (25) and a web flank surface (69) facing away from the drill tip (25), and/or **in that** the web surfaces (65, 67, 69) are at least partially formed as free surfaces which are inoperative in the tapping stroke (G) and/or in the reversing stroke (R), and **in that** the web vertex surface (65) merges at a first circumferential web edge (71) into the web flank surface (67) facing the drill tip (25), and/or **in that** the web vertex surface (65) merges at a second circumferential web edge (72) into the web flank surface (69) facing away from the drill tip (25), and **in that** at least one of the two circumferential web edges (71, 72) is formed as a circumferential groove cutting edge (US), by means of which the circumferential groove (13) adjoining the bore internal thread (9) is formed, by cutting, in the groove forming stroke (N).

8. Method for producing a threaded bore (1) in a workpiece (5) by means of a tapping tool according to any one of the preceding claims.

9. Method according to claim 8, **characterised in that** between the tapping stroke (G) and the reversing stroke (R), a groove forming step takes place, in which the tapping stroke (G) in the tapping direction (I) is extended by a groove forming stroke (N), namely with the formation of a circumferential groove (13) adjoining the internal thread (9) without a thread pitch, in which the thread profile (29) of the internal thread (9) can rotate without load, and/or **in that** the provision of the circumferential groove (13) also makes it possible for the tapping tool (23) to produce a circumferential thread countersink (7) in the bore opening of the bore (1) using a cutting edge (49), wherein the circumferential thread countersink (7) is produced during the above groove forming step.

## Revendications

1. Outil de taraudage pour la production d'un trou taraudé (1) avec un filet intérieur (9) dans une pièce (5), dans lequel, dans une course de taraudage (G), l'outil de taraudage (23) peut être enfoncé dans la pièce (5), et dans une course d'inversion (R), l'outil de taraudage (23) peut être sorti du trou taraudé (1), dans lequel l'outil de taraudage (23) présente une tige de serrage (24) et un corps de taraudage (26) s'y raccordant et au moins une rainure de serrage (28) s'étend le long de l'axe longitudinal (A) du corps de taraudage (26) jusqu'à une coupe principale (27) côté avant sur la pointe de foret (25), coupe principale (27) sur laquelle une surface d'enlèvement (31) délimitant la rainure de serrage (28) et une face de dépouille (33) côté avant de la pointe de foret (25) se rejoignent, dans lequel, dans la direction circonférentielle de l'outil, la rainure de serrage (28) est limitée par au moins une barrette de foret (35) et la surface d'enlèvement (31) de la rainure de serrage (28) se transforme en une surface arrière (37) de la barrette de foret (35) du côté de la circonférence extérieure en formant une arête secondaire (36), et dans lequel l'arête secondaire (36) et l'arête principale (27) côté avant se rejoignent au niveau d'un bec principal (39) radialement extérieur, dans lequel un profilé fileté (29) avec au moins une dent de profilé fileté (41, 42, 43) est réalisé sur la surface arrière (37) du côté de la circonférence extérieure de la barrette de foret (35), **caractérisé en ce que** le profil de filetage d'outil (29) présente au moins une dent d'inversion (57) avec une arête de coupe/de formage de flancs filetés (59), au moyen de laquelle une surépaisseur de flanc (Δx) peut être enlevée des flancs (19) filetés et/ou formée lors de la course d'inversion (R), dans lequel les flancs (19) filetés sont des flancs (19) filetés du filet intérieur (9) à fabriquer, qui sont tournés vers les copeaux (51) à éliminer lors de la course (G) de taraudage.

2. Outil de taraudage selon la revendication 1, **caractérisé en ce que lors de la course de taraudage (G), l'outil de taraudage (23) peut être** enfoncé dans la pièce (5) avec un avancement (f_{G}) de taraudage dans le sens de taraudage (I) et avec une vitesse de rotation (n_{G}) de taraudage synchronisée avec celui-ci, et la coupe principale (27) d'outil produit une perforation d'alésage de noyau et le profil fileté (29) d'outil forme le filet intérieur (9) sur la paroi intérieure de la perforation d'alésage de noyau, et/ou **en ce que**, lors de la course d'inversion (R), l'outil de taraudage (23) peut être extrait du trou taraudé (1) avec un avancement d'inversion (f_{R}) opposé ainsi qu'avec une vitesse de rotation d'inversion (n_{R}) synchronisée avec celui-ci dans la direction d'inversion (II), de sorte que le profil de taraudage de l'outil (29) peut être guidé hors du trou taraudé (1) dans le pas de vis (15) du filet intérieur (9), et/ou **en ce que** des copeaux (51) sont produits lors de la course de taraudage (G), lesquels sont transportés hors du trou taraudé (1) dans une direction d'élimination de copeaux (S) opposée à la direction de taraudage (I) et entrent alors en collision avec les flancs de filet (19) du filet intérieur (9), qui sont tournés vers les copeaux (51) à éliminer.

3. Outil de taraudage selon l'une quelconque des revendications 1 ou 2, **caractérisé en ce que** la dent d'inversion (57) réalisée sur la face arrière (37) de la barrette de foret dépasse radialement vers l'extérieur le bec principal (39) d'une hauteur de dent d'inversion (Δr_{R}), et/ou **en ce que** l'arête de coupe (59) de flancs filetés de la dent d'inversion (57) se transforme en une coupe d'inversion (61) au niveau d'un angle intérieur (60) de l'arête de coupe, situé radialement à l'intérieur, et **en ce que** le sommet intérieur (21) du filet est ébavuré au moyen de la coupe d'inversion (61) lors de la course d'inversion (R).

4. Outil de taraudage selon la revendication 3, **caractérisé en ce que** la coupe d'inversion (61) s'étend dans la direction longitudinale du foret, et/ou **en ce que** la surface arrière (37) de la barrette de foret du côté de la circonférence extérieure et la surface d'enlèvement (31) de la rainure de serrage (28) se rejoignent au niveau de la coupe d'inversion (61), et/ou **en ce que** la coupe d'inversion (61) et l'arête secondaire (36) sont réalisées sur des arêtes longitudinales (K1, K2) de la barrette de foret, opposées dans la direction circonférentielle du foret.

5. Outil de taraudage selon l'une quelconque des revendications précédentes, **caractérisé en ce que,** dans la direction circonférentielle du foret, une barrette dentée (63) réalisée sur la surface arrière (37) de la barrette de foret se raccorde à la au moins une dent de profilé fileté (41, 42, 43) et/ou à la dent d'inversion (57), et/ou **en ce que** les dents de profilé fileté (41, 42, 43) et/ou la dent d'inversion (57) sont réalisées chacune sous forme de dent de formage avec des arêtes de formage correspondantes et/ou sous forme de dent de coupe avec des arêtes de coupe d'enlèvement de copeaux correspondantes ou en tant que combinaison de celles-ci.

6. Outil de taraudage selon l'une quelconque des revendications précédentes, **caractérisé en ce que** la dent d'inversion (57) et la dent de profilé fileté (43) sont reliées l'une à l'autre par une barrette dentée (63) réalisée sur la surface arrière (37) de la barrette de foret, et/ou **en ce que** la barrette dentée (63) présente des faces avant opposées l'une à l'autre dans la direction circonférentielle du foret, qui forment respectivement la dent de profilé fileté (43) et la dent d'inversion (57).

7. Outil de taraudage selon l'une quelconque des revendications précédentes, **caractérisé en ce que** la barrette dentée (63) présente une surface de crête de barrette (65) radialement extérieure ainsi qu'une surface de flanc de barrette (67) orientée vers la pointe de foret (25) et une surface de flanc de barrette (69) opposée à la pointe de foret (25), et/ou **en ce que** les surfaces de barrette (65, 67, 69) sont réalisées au moins en partie sous forme de surfaces libres qui sont sans fonction dans la course de taraudage (G) et/ou dans la course d'inversion (R), et **en ce que** la surface de crête de barrette (65) se transforme, sur une première arête de barrette périphérique (71), en la surface de flanc de barrette (67) tournée vers la pointe de foret (25), et/ou **en ce que** la surface de crête de barrette (65) se transforme, au niveau d'une seconde arête de barrette périphérique (72), en la surface de flanc de barrette (69) opposée à la pointe de foret (25), et **en ce qu'**au moins l'une des deux arêtes de barrette périphériques (71, 72) est réalisée sous la forme d'une arête de rainure périphérique (US), au moyen de laquelle la rainure périphérique (13) se raccordant au filet intérieur de trou de forage (9) est formée par usinage dans la course de formage de rainure (N).

8. Procédé de production d'un trou taraudé (1) dans une pièce (5) au moyen d'un outil de taraudage selon l'une quelconque des revendications précédentes.

9. Procédé selon la revendication 8, **caractérisé en ce qu'**entre la course de taraudage (G) et la course d'inversion (R) a lieu une étape de formage de rainure, au cours de laquelle la course de taraudage (G) est prolongée dans la direction de taraudage (I) d'une course de formage de rainure (N), et ce en formant une rainure circulaire (13) sans pas de filetage se raccordant au filetage intérieur (9), dans laquelle le profil fileté (29) du filet intérieur (9) peut tourner sans charge, et/ou **en ce que** la fourniture de la rainure périphérique (13) permet en outre à l'outil de taraudage (23) de produire avec une arête de coupe (49) un creux de filet (7) périphérique dans l'ouverture d'alésage de l'alésage (1), dans lequel le creux de filet (7) périphérique est produit pendant l'étape de formation de rainure ci-dessus.
